# EUROPÄISCHE PATENTANMELDUNG

(11) **EP 1 626 252 A1**
(43) Veröffentlichungstag der Anmeldung: **15.02.2006**
(21) Anmeldenummer: 04019278.3
(22) Anmeldetag: 13.08.2004
(51) Int. Cl.: G01D 5/39, G06Q 10/00

(54) **Einrichtung zur Vermittlung von Information über den Zustand eines Lagers**

(71) Anmelder: Bonetta, Diego A., 5706 Boniswil (CH)
(72) Erfinder: Bonetta, Diego A., 5706 Boniswil (CH)
(74) Vertreter: Wagner, Wolfgang Heribert

(57) **Zusammenfassung**

Eine Ueberwachungseinrichtung (4) in einem Lager weist mehrere Sensoren, z.B. einen Ultraschallsensor (7), einen Magnetsensor (10) und eine Waage (13) auf, die Lagerplätze (1, 2, 3) überwachen. Sensorsignale gehen an eine Sendevorrichtung (14), die daraus standardisierte SMS-Nachrichten erzeugt und jeweils über ein Mobiltelefonnetz (16) an eine Empfangsvorrichtung (17) bei einem Lieferanten leitet, wo die Nachricht z.B. einen Auftrag für eine Lieferung auslöst. Die Nachrichten können auch durch Abfragen, die von der Empfangsvorrichtung (17) ausgehen, ausgelöst werden. Es ist auch möglich, jeweils einen Sensor mit einer Sendevorrichtung in einem Gehäuse zu integrieren. Die Empfangsvorrichtung (17) kann ein Mobiltelefon sein, aber auch z.B. ein PC, der über ein Modem mit einem terrestrischen Telefonnetz verbunden ist, das wie das Mobiltelefonnetz zu einem umfassenderen Kommunikationsnetz gehört. Die Einrichtung ist sehr einfach installierbar. Die Ueberwachungseinrichtung (4) benötigt lediglich einen Stromanschluss.

## Beschreibung

### Technisches Gebiet

Die Erfindung betrifft eine Einrichtung zur Vermittlung von Information über den Zustand eines Lagers, wie sie zur Sicherstellung von rechtzeitigem Nachschub in Kanban- und ähnlichen Systemen eingesetzt werden.

### Stand der Technik

Aus WO 02/39 352 A1 ist eine derartige Einrichtung bekannt, bei welcher Information über die Belegung von Lagerplätzen durch einen Sensor ermittelt und die entsprechenden Daten verarbeitet und dann über ein Kommunikationsnetz wie Internet oder ein Telefonnetz an die EDV eines Lieferanten übermittelt werden, wo dann z.B. eine Lieferung und damit verbundene Vorgänge ausgelöst werden.

Eine solche Einrichtung ist verhältnismässig aufwendig in der Installation und macht eine Verknüpfung mit einer senderseitigen EDV-Anlage, die die Daten für die Uebertragung aufbereitet und dann etwa über ein Modem an das Kommunikationsnetz weitergibt, unabdingbar. Eine solche Verknüpfung ist oft aus Sicherheitsgründen unerwünscht und kompliziert und verteuert die Installation des Systems beträchtlich.

### Darstellung der Erfindung

Der Erfindung liegt die Aufgabe zu Grunde, eine möglichst einfache und unabhängig arbeitende Einrichtung anzugeben, die im wesentlichen die gleiche oder ähnliche Aufgaben erfüllt.

Die Erfindung, wie sie im Anspruch 1 umrissen ist, schafft eine derartige Einrichtung, die vor allem senderseitig äusserst einfach installierbar ist und dort keinerlei Verknüpfung mit bestehenden EDV-Anlagen erfordert. Die erfindungsgemässe Einrichtung erfordert lediglich die Montage von Sensoren und Sendevorrichtungen, die jeweils in einem Gehäusde angeordnet sein können, im Lager und deren Anschluss an eine Stromversorgung, während sie sonst völlig unabhängig sein kann. Sie liefert etwa einem Lieferanten genau diejenigen Daten, die er benötigt, um rechtzeitig nachzuliefern, aber keine weiteren Informationen. Der Lieferant kann dagegen die ihm übermittelten Daten in seine EDV-Anlage einspeisen und zusammen mit eigenen Daten weiterverarbeiten oder sie auch lediglich anzeigen. Daher ist je nach den Bedürfnissen auch eine sehr einfache Installation ausreichend, u.U. genügt ein Mobiltelefon.

### Kurze Beschreibung der Zeichnungen

Im folgenden wird die Erfindung anhand einer Figur, welche lediglich ein Ausführungsbeispiel darstellt, näher erläutert.

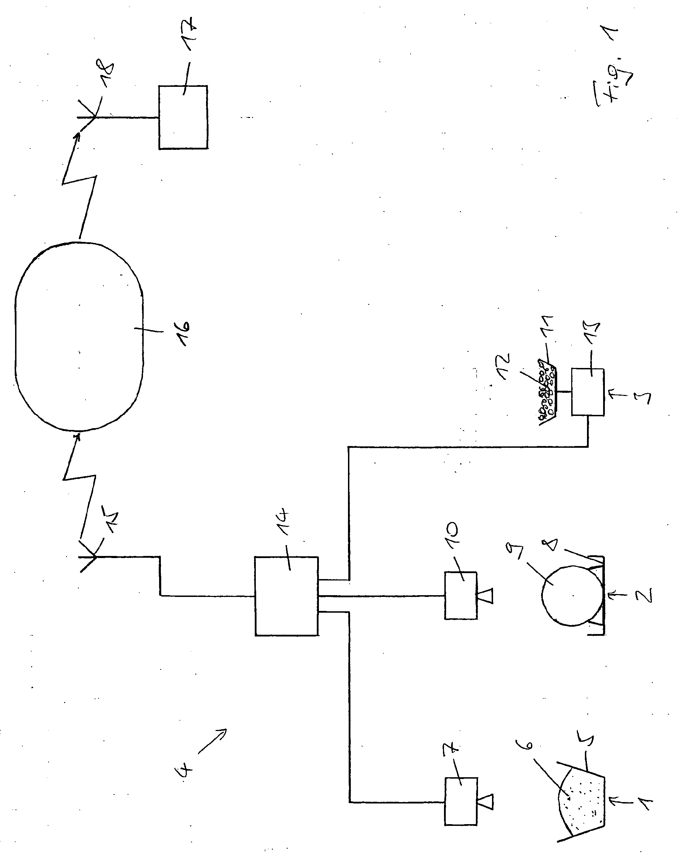

- Fig. 1: zeigt eine schematische Darstellung einer erfindungsgemässen Einrichtung.

### Wege zur Ausführung der Erfindung

In einem Lager, das mehrere, zu Illustrationszwecken verschieden ausgebildete Lagerplätze 1, 2, 3 aufweist, ist eine Ueberwachungseinrichtung 4 angeordnet, die einen Sensor an jedem der Lagerplätze umfasst. Der Lagerplatz 1 ist als offener Behälter 5 ausgebildet, der Schüttgut, z.B. einen pulverförmigen Farbstoff 6 oder auch Schleifpulver, Reinigungspulver oder dergleichen enthält. Der entsprechende Sensor ist als Ultraschallsensor 7 ausgebildet, der geeignet ist, ein Sensorsignal zu erzeugen, das den mittleren Füllstand im Behälter 5 widerspiegelt. Der Lagerplatz 2 ist als offene Ablagefläche 8 ausgebildet, welche einen Artikel Stückgut, z.B. einen Elektromotor 9 oder auch eine Extruderschraube, einen Fräskopf oder ein vergleichbares grösseres Verschleissteil aufnimmt. Der entsprechende Sensor ist als Magnetsensor 10 ausgebildet, der ein Sensorsignal erzeugt, das Anwesenheit oder Abwesenheit des Elektromotors 9 anzeigt. Der Lagerplatz 3 weist einen flachen offenen Behälter 11 auf, der wiederum Schüttgut, z.B. Schrauben 12 oder auch Spulen oder andere robuste mechanische, elektrische oder elektronische Komponenten enthält. Der Sensor ist hier als Waage 13 ausgebildet, auf der der Behälter 11 abgestützt ist und welche ein Sensorsignal erzeugt, das dem Gewicht des Behälters 11 mit den Schrauben 12 proportional ist, so dass es nach Abzug des Gewichtes des Behälters 11 in einem festen Verhältnis zur Zahl der Schrauben 12 steht.

Die Sensoren sind mit einer im Lager angeordneten Sendevorrichtung 14 durch Kabel oder auch über Funk verbunden. Sie ist ihrerseits, wiederum über ein Kabel, mit einer externen Antenne 15 verbunden, so dass die Verbindung der Ueberwachungseinrichtung 1 mit der Aussenwelt auch in einem abgeschirmten Gebäude gewährleistet ist. Sonst kann die Antenne jedoch mit der Sendevorrichtung in einem Gehäuse integriert sein. Ueber die Antenne 15 ist die Sendevorrichtung 14 mit einem öffentlichen Mobiltelefonnetz 16 (GSM) verbunden, gleich wie eine vom Lager entfernte, z.B. bei einem Lieferanten der gelagerten Artikel eingerichtete Empfangsvorrichtung 17 mit einer Antenne 18. Statt des Mobiltelefonnetzes 16 kann auch ein Kommunikationsnetz allgemeinerer Art vorgesehen sein, das jedoch immer ein Mobiltelefonnetz umfasst, mit welchem die Sendevorrichtung verbunden ist. Im übrigen kann es terrestrische Telefonleitungen aus Koaxialkabeln oder Glasfasern, Richtfunkstrecken und beliebige andere Mittel des Informationsaustauschs mitumfassen. Die Empfangsvorrichtung kann in diesem Fall auch z.B. über ein Modem an das terrestrische Telefonnetz angeschlossen sein.

Das Lager wird in der Regel mehrere gleichartige Lagerplätze aufweisen, an denen gleichartige Artikel gelagert sind und demnach von gleichartigen Sensoren überwacht werden. Mehrere, z.B. zwei, vier oder acht dieser Sensoren sind dann mit einer Sendevorrichtung verbunden, doch ist auch ein gemischter Aufbau, bei dem unterschiedliche Sensoren mit einer Sendevorrichtung verbunden sind, möglich wie in Fig. 1 dargestellt. In einem Lager können auch mehrere Sendevorrichtungen, jede mit einer Gruppe von Sensoren verbunden, vorgesehen sein. Bei Kabelverbindung zwischen den Sensoren und ihrer Sendevorrichtung können die ersteren jeweils über die letztere mit Strom versorgt werden, so dass am Ort lediglich Stromanschlüsse für die Sendevorrichtungen erforderlich sind. Die Sensoren können über die Kabelverbindung jeweils ein Analogsignal an die Sendevorrichtung liefern, das dort digitalisiert wird. Bei Funkverbindung zwischen den Sensoren und der Sendevorrichtung ist dagegen in der Regel auch für jeden Sensor ein Stromanschluss erforderlich. Das Sensorsignal kann in diesem Fall bereits im Sensor digitalisiert und eventuell auch bearbeitet werden. Es ist auch eine Vorverarbeitung der Sensorsignale, eventuell zusammen mit weiteren Signalen oder Parametern, in der Sendevorrichtung, z.B. durch Ueberprüfung von Bedingungen und Verknüpfung daraus abgeleiteter logischer Variablen möglich.

Es ist auch möglich, jeden Lagerplatz mit einem kompakten unabhängigen Gerät auszustatten, das Sensor, Sendevorrichtung und Antenne in einem Gehäuse umfasst. In diesem Fall ist die Ueberwachungseinrichtung besonders einfach zu installieren, da die besagten Geräte lediglich jedes mit einem Stromanschluss, z.B. einer Steckdose, verbunden werden müssen. In ein solches Gerät kann auch ein GPS-Gerät integriert sein, das jeweils die genaue geographische Lage ermittelt, die als zusätzlicher Parameter gesendet werden kann. Dies ist vor allem bei mobilen oder im Gelände angeordneten Lagern oder bei Transporten u.U. von Interesse. Freilich kann auch bei Ueberwachungseinrichtungen mit räumlicher Trennung von Sensoren und Sendevorrichtungen ein GPS-Gerät entweder mit der Sendevorrichtung oder mit einem der Sensoren oder auch mit jedem derselben integriert sein.

In jedem Fall ist jede Sendevorrichtung 14 mit einer SIM-Karte ausgerüstet und damit ein selbständiger, unabhängig ansprechbarer Teilnehmer am Mobiltelefonnetz 16.

Die Empfangsvorrichtung 17 ist im einfachsten Fall, mit integrierter Antenne 18, ein Mobiltelefon, doch kann sie auch eine Datenverarbeitungsanlage umfassen oder eine Schnittstelle zu einer bestehenden Datenverarbeitungsanlage.

Andererseits kann es sich um einen PC handeln, der statt einer Antenne ein Modem umfasst, über das er an ein terrestrisches Telefonnetz angeschlossen ist, welches einen Teil eines Kommunikationsnetzes bildet, das auch das mit der Sendevorrichtung in Verbindung stehende Mobiltelefonnetz umfasst.

Wie erwähnt erzeugt jeder der Sensoren 7, 10, 13 ein Signal, z.B. ein Analogsignal, das an die Sendevorrichtung 14 gelangt. Dort wird es in ein digitales Signal umgesetzt und das Ergebnis in eine standardisierte SMS-Nachricht eingebunden. Die standardisierte SMS kann eine Maximallänge von 160 Zeichen aufweisen und aus alphanumerischen Feldern bestehen, die in der Länge frei sein können. Sie enthalten in der Regel mindestens eine Identifikation des Lagerplatzes oder des Sensors und sonstige Sensorinformationen, weiter Kundeninformationen, Positionsinformationen wie Adressbestandteile oder gegebenenfalls GPS-Positionskoordinaten, Befehle und freien Text. Die Inhalte können natürlich auch verschlüsselt sein. Ein Beispiel wäre etwa eine SMS mit folgenden Feldern:

Seriennummer; Sensortyp; Sensorwert; Alarmwert; Artikel; Artikelnummer; Kunde; Gebinde; Losgrösse; Datum; Menge; UPC; EAN; Lieferort; PLZ; Adresse; Fertigungsbefehlscode; Auftragsbefehlscode; Lieferbefehlscode; Rechnungsbefehlscode; Freibefehlscode; Frei1; Frei2; FreiN.

Sie wird dann mit entsprechender Adresse in das Mobiltelefonnetz 16 eingespeist und gelangt so an die Empfangsvorrichtung 17, in welcher die Daten aus der standardisierten SMS verwendet werden. Im einfachsten Fall wird die SMS auf einer als Mobiltelefon ausgebildeten Empfangsvorrichtung einfach angezeigt. In anderen Fällen werden die Daten aus der SMS extrahiert und in die betriebliche EDV eingespeist, wo sie automatisch z.B. Lieferaufträge und damit verbundene Vorgänge wie Rechnungsstellung, Nachbestellungen usw. auslösen können. Ist die Empfangsvorrichtung ein PC, so kann die SMS im Kommunikationsnetz in eine e-mail umgewandelt und in dieser Form an die Empfangsvorrichtung gesandt werden. Es können auch mehrere an unterschiedlichen Orten befindliche Empfangsvorrichtungen mit dem Mobiltelefonnetz in Verbindung stehen und Nachrichten je nach den Umständen an die eine oder die andere davon gesandt werden.

Die Nachrichten können von der Sendevorrichtung regelmässig in bestimmten zeitlichen Abständen ausgesandt werden oder auch nur bei bestimmten Aenderungen im Lager, z.B. wenn der Elektromotor 9 dem Lagerplatz 8 entnommen wird oder wenn der Füllstand im Behälter 5 unter ein festgelegtes Minimum fällt. In diesen Fällen können auch Latenzzeiten vorgesehen sein, die etwa festlegen, dass eine Nachricht erst gesendet wird, wenn der Elektromotor 9 während einer bestimmten Zeitspanne, z.B. 24 Stunden, vom Lagerplatz 2 abwesend war. Andererseits ist es auch möglich, dass sich die Sendevorrichtung 14 passiv verhält und nur auf Abfrage von der Empfangsvorrichtung 17 hin eine Nachricht sendet.

Die Einrichtung kann, wie schon erwähnt, vor allem zur Sicherung des Nachschubs beim Lagerhalter, der z.B. ein Produzent oder Verteiler sein kann, eingesetzt werden. Die Ueberwachungseinrichtung 4 ist in seinem Lager eingebaut, während bei einem Lieferanten jeweils eine Empfangsvorrichtung 17 eingerichtet ist. So kann etwa, sobald der Füllstand im Behälter 5 unter einen vorgegebenen Wert fällt, automatisch eine Nachricht erzeugt und an die Empfangsvorrichtung beim entsprechenden Lieferanten gesandt werden. Dort kann die Information in die betriebliche EDV eingespeist werden, die daraufhin einen Auftrag für die Nachlieferung erzeugt und gleichzeitig die entsprechenden buchhalterischen Daten herstellt, die später in die Rechnungsstellung an den Kunden einfliessen. Die Befehle können Steuercodes enthalten und unmittelbar bestimmte Vorgänge auslösen, z.B. Erzeugung eines Auftrags, Erstellung eines Lieferscheins, Lagerkorrektur usw..

Z.B. erzeugt 24 Stunden nach Entnahme des Elektromotors 9 von der Ablagefläche 8 die Sendevorrichtung 14 eine entsprechende SMS-Nachricht an die Empfangsvorrichtung 17 des entsprechenden Lieferanten, die hier etwa ein Mobiltelefon ist, auf dem die Nachricht angezeigt wird. Der Lieferant stellt daraufhin einen neuen Elektromotor in Spezialanfertigung her und liefert ihn sofort nach Fertigstellung.

Das Gewicht der des Behälters 11 und der Schrauben 12 wird regelmässig von der Empfangsvorrichtung 17 abgefragt und das Ergebnis an die betriebliche EDV des Lieferanten weitergeleitet. Dort wird jeweils ein Wert für die Zahl der Schrauben 13 berechnet und aus den beiden letzten Ergebnissen durch lineare Extrapolation der Zeitpunkt vorausberechnet, an dem unter der Annahme gleichbleibenden Verbrauchs die besagte Zahl auf Null gesunken sein wird. 48 Stunden vor diesem Zeitpunkt wird eine Nachlieferung ausgelöst.

Je nach Bedürfnissen und Art des Verbrauchs sind verschiedenste Szenarien möglich. Die Einrichtung erlaubt es jedenfalls, eine rechtzeitige Auffüllung des Lagers sicherzustellen. Dies geschieht mit einfachen, leicht und billig installierbaren und von der EDV des Lagerhalters völlig unabhängigen Mitteln.

### Bezugszeichenliste

- 1, 2, 3: Lagerplätze
- 4: Ueberwachungseinrichtung
- 5: Behälter
- 6: Farbstoff
- 7: Ultraschallsensor
- 8: Ablagefläche
- 9: Elektromotor
- 10: Magnetsensor
- 11: Behälter
- 12: Schrauben
- 13: Waage
- 14: Sendevorrichtung
- 15: Antenne
- 16: Mobiltelefonnetz
- 17: Empfangsvorrichtung
- 18: Antenne

## Patentansprüche

1. Einrichtung zur Vermittlung von Information über den Zustand eines Lagers mit mindestens einem Lagerplatz zur Aufbewahrung von Lagergut, mit einer im Lager angeordneten Ueberwachungseinrichtung (4) und einer davon entfernten, über ein Kommunikationsnetz, welches ein öffentliches Mobiltelefonnetz (16) umfasst, mit ihr verbindbaren Empfangseinrichtung (17), wobei die Ueberwachungseinrichtung (4) mindestens einen Sensor umfasst, welcher geeignet ist, Anwesenheit und Abwesenheit von Lagergut am Lagerplatz (1, 2, 3) oder die Menge des Lagergutes am Lagerplatz (1, 2, 3) festzustellen und ein entsprechendes Sensorsignal zu erzeugen, sowie eine Sendevorrichtung (14), welcher das mindestens eine Sensorsignal zuleitbar ist und welche geeignet ist, eine vom mindestens einen Sensorsignal abgeleitete Information enthaltende, über das öffentliche Mobiltelefonnetz (16) versendbare Nachricht herzustellen und die Nachricht an die Empfangseinrichtung (17) adressiert in das Mobiltelefonnetz (16) einzuspeisen, während die Empfangseinrichtung (17) geeignet ist, die Nachricht aus dem Kommunikationsnetz zu empfangen.

2. Einrichtung nach Anspruch 1, **dadurch gekennzeichnet, dass** der mindestens eine Sensor mit der Sendevorrichtung (14) elektrisch leitend verbunden ist.

3. Einrichtung nach Anspruch 2, **dadurch gekennzeichnet, dass** die Ueberwachungseinrichtung ein Gehäuse umfasst, in dem der mindestens eine Sensor zusammen mit der Sendevorrichtung angeordnet ist.

4. Einrichtung nach einem der Ansprüche 1 bis 3, **dadurch gekennzeichnet, dass** der Sensor ein optischer Sensor, ein Ultraschallsensor (7), ein Magnetsensor (10) oder eine Waage (13) ist.

5. Einrichtung nach einem der Ansprüche 1 bis 4, **dadurch gekennzeichnet, dass** die Nachricht eine SMS-Nachricht ist.

6. Einrichtung nach Anspruch 5, **dadurch gekennzeichnet, dass** die SMS-Nachricht ein standardisiertes Format aufweist, welches vorzugsweise 160 Zeichen zulässt und Felder, welche mindestens Sensorinformationen, Kundeninformationen, Positionsinformationen und eventuell Befehle enthalten, festlegt.

7. Einrichtung nach Anspruch 6, **dadurch gekennzeichnet, dass** gemäss dem standardisierten Format mindestens folgende Felder vorgesehen sind: Seriennummer; Sensortyp; Sensorwert; Alarmwert; Artikel; Artikelnummer; Kunde; Gebinde; Losgrösse; Datum; Menge; UPC; EAN; Lieferort; PLZ; Adresse; Fertigungsbefehlscode; Auftragsbefehlscode; Lieferbefehlscode; Rechnungsbefehlscode; Freibefehlscode; Frei1; Frei2; FreiN.

8. Einrichtung nach einem der Ansprüche 1 bis 7, **dadurch gekennzeichnet, dass** die Empfangseinrichtung (17) geeignet ist, Nachrichten aus einem Mobiltelefonnetz (16) zu empfangen.

9. Einrichtung nach Anspruch 8, **dadurch gekennzeichnet, dass** die Empfangseinrichtung (17) ein Mobiltelefon ist.

10. Einrichtung nach einem der Ansprüche 1 bis 9, **dadurch gekennzeichnet, dass** die Empfangseinrichtung (17) eine Datenverarbeitungsvorrichtung oder eine Schnittstelle zu einer Datenverarbeitungsvorrichtung umfasst.

11. Einrichtung nach einem der Ansprüche 1 bis 10, **dadurch gekennzeichnet, dass** sie die Uebermittlung von Befehlen, insbesondere von Abfragen von der Empfangseinrichtung (17) zur Ueberwachungseinrichtung (14) erlaubt.

12. Einrichtung nach einem der Ansprüche 1 bis 11, **dadurch gekennzeichnet, dass** die Ueberwachungseinrichtung (4) mindestens ein GPS-Gerät umfasst.

13. Einrichtung nach einem der Ansprüche 3 bis 11 und Anspruch 12, **dadurch gekennzeichnet, dass** das mindestens eine GPS-Gerät mit der Sendevorrichtung (14) im Gehäuse angeordnet ist.
